**Europäisches Patentamt**

**European Patent Office**

**Office européen des brevets**

(19)

(11) Veröffentlichungsnummer : **0 067 116 B1**

# EUROPÄISCHE PATENTSCHRIFT

(12)

(45) Veröffentlichungstag der Patentschrift :
07.05.86

(21) Anmeldenummer : **82730076.5**

(22) Anmeldetag : **03.06.82**

(51) Int. Cl.⁴ : **B 01 D 13/04**, B 01 D 19/00,
B 01 F 3/04

(54) **Silikonkautschukmembranen, Verfahren zu ihrer Herstellung und ihre Verwendung zum Be- und Entgasen von Flüssigkeiten.**

(30) Priorität : 04.06.81 DE 3122186

(43) Veröffentlichungstag der Anmeldung :
**15.12.82 Patentblatt 82/50**

(45) Bekanntmachung des Hinweises auf die Patenterteilung : **07.05.86 Patentblatt 86/19**

(84) Benannte Vertragsstaaten :
**BE CH FR GB LI NL**

(56) Entgegenhaltungen :
DE-A- 2 026 079
DE-A- 2 110 158
DE-A- 2 148 733
DE-A- 2 850 998
US-A- 2 966 235
US-A- 3 274 750
US-A- 3 440 264
US-A- 3 721 596
US-A- 3 819 772
US-A- 3 969 240
US-A- 4 093 515
US-A- 4 243 701

(73) Patentinhaber : **Lauffer, Martin**
**Calwer Strasse 15/1**
**D-7506 Bad Herrenalb 5 (DE)**

(72) Erfinder : **Lauffer, Martin**
**Schmiedestrasse 15**
**D-3013 Barsinghausen 1 (DE)**
Erfinder : **Sekoulov, Ivan, Prof. Dr. Ing.**
**Müllenhoffweg 22**
**D-2000 Hamburg 52 (DE)**

(74) Vertreter : **Eikenberg & Brümmerstedt Patentanwälte**
**Schackstrasse 1**
**D-3000 Hannover 1 (DE)**

**Beschreibung**

Die Erfindung betrifft eine Silikonkautschuk-Membran mit einem darin eingebetteten Stützgewebe zum Be- und Entgasen von Flüssigkeiten in großtechnischen Prozessen.

Dünne Silikonkautschuk-Membranen sind seit einiger Zeit im Zusammenhang mit Trenn- und Transportverfahren auf dem medizinischen Sektor, z. B. bei Herz-Lungen-Maschinen, bekannt. Hierbei handelt es sich um Membranen verhältnismäßig kleiner Abmessungen, die im Rahmen ihrer Anwendung weder hinsichtlich ihrer Funktionsfähigkeit noch hinsichtlich ihrer mechanischen Eigenschaften große Probleme aufwerfen.

So wird beispielsweise in der Literaturschrift von M. E. HODGSON, « Silicone Rubber Membranes, Proceedings of the Filtration Society, Filtration and Separation », July-August 1973, beschrieben, daß die bekannten Silikonkautschuk-Membranen in der Herz-Lungen-Maschine einen Gasaustausch zwischen dem Blut und der äußeren Umgebung ermöglichen.

Auch die « Extraktion » von Sauerstoff aus Wasser mit Hilfe derartiger Membranen ist bekannt. Wird beispielsweise ein mit einer Silikonkautschuk-Membran überzogener Tierkäfig in Wasser getaucht, so lebt das Tier trotz der völligen Umschließung von Wasser, da gelöster Sauerstoff aus dem Wasser in den Käfig hineindiffundiert und $CO_2$ aus dem Käfig heraus in das Wasser hineindiffundiert.

Dünne Silikon-Polycarbonatmembranen in einer Stärke von etwa 0,015 $\mu$ können auch in mehreren Schichten zusammengefügt werden und lassen sich dann beispielsweise zur Anreicherung von Luft mit Sauerstoff ersetzen (vgl. WARD, BROWALL and SALEMME, Journal of Membrane Science, 1 (1976), Seiten 99-108, Verlag Elsevier Scientific Publishing Company, Amsterdam).

Außerordentlich dünne Silikonkautschuk-Membranen werden beispielsweise durch Ausbreiten von Lösungen eines Copolymerisats auf einer Wasseroberfläche und anschließendem Verdunsten des Lösungsmittels hergestellt. Eine weitere Möglichkeit ist das Eintauchen einer Glasplatte in eine Polymerlösung und nachfolgendes Verdunsten des Lösungsmittels, wobei die Membran auf der Glasplatte zurückbleibt. Varianten dieser Verfahren werden beispielsweise in der Literaturschrift von WARD, BROWALL and SALEMME, Journal of Membrane Science, 1 (1976), Seiten 99-108, Verlag Elsevier Scientific Publishing Company, Amsterdam, beschrieben.

Die Einbringungsgeschwindigkeit eines Gases von der Gasphase durch eine Membran in eine flüssige Phase ist — abgesehen von Oberflächenphänomenen, wie Absorption und Desorption — direkt proportional zur Dicke der Membran und zur Partialdruckdifferenz zwischen Gasphase und flüssiger Phase. Da bei bewegter Flüssigkeit keine geschwindigkeitsbestimmenden Grenzschichten aufgebaut werden, und somit Absorption und Desorption vernachlässigt werden können, gilt angenähert der Zusammenhang :

$$N_i = \frac{Pr_i \cdot A\, \Delta P}{\delta} \left[\frac{cm^3}{sec}\right]$$

Flußgeschwindigkeit
wobei

$$Pr_i \left[\frac{cm^3\ cm}{cm^2\ sec\ cmHg}\right]$$

Permeabilität in der Membran
A [cm²] Membranfläche
ΔP [cm Hg] Druckdifferenz zwischen den beiden Membranseiten
δ [cm] Membrandicke

Aus der US-A 4 093 515 ist eine Membran bekannt, die mindestens zwei Membranschichten enthält, die nacheinander hergestellt werden, wobei die unterste Schicht auf einen Aluminiumträger gegossen wird, worauf anschließend die zweite Schicht auf die erste Schicht aufgegossen und gegebenenfalls dann noch eine dritte Schicht aufgebracht wird. Dabei ist auch erwähnt, daß ein Stützgewebe in einer der Schichten eingebettet werden kann, was vorzugsweise innerhalb der zweiten Schicht erfolgt, indem das Stützgewebe beim Gießen der Schicht unter dem Abstreifmesser eingebracht wird. Damit liegt das Stützgewebe innerhalb der Membran unsymmetrisch. Ferner besitzen die Schichten als Folge ihrer Herstellungstechnik ebene Oberflächen. Sie weisen also überall die gleiche Dicke auf, wobei auch die Maschen des Stützgewebes voll ausgefüllt sind.

Das gleiche gilt auch für die in der US-A 3 819 772 beschriebene Membran, die bevorzugt eine zweischichtige Membran zum Gegenstand hat, obwohl auch auf die Möglichkeit der Ausbildung als einzelne Schicht hingewiesen wird, wobei ein Stützgewebe vorgesehen wird, das in Form eines Gewebes oder eines Vlieses aus Kunststoff oder Glasfasern in die gegossene Schicht eingelegt wird, bevor die Verdampfung des Lösungsmittels beginnt. Auch hier ist die Dicke der Membran überall gleich, und die Maschen des Gewebes sind voll ausgefüllt.

Derartige Membranen sind für großtechnische Prozesse, z. B. bei der Abwasser-Reinigung oder Trinkwasser-Aufbereitung sowohl von ihrem Aufbau her als auch hinsichtlich ihrer Herstellungsweise nicht geeignet oder brauchbar. Trotz des Stützgewebes würden sie in großflächigen Anordnungen nicht die erforderliche mechanische Festigkeit aufweisen. Auch läßt sich durch Gießen nur eine Membran mit begrenzten Abmessungen herstellen.

So sind die bekannten dünnen Membranen wohl hinsichtlich ihrer Stärke für die Gaseinbringung geeignet, sie weisen jedoch den Nachteil auf, daß die Druckdifferenzen in einem eng begrenzten Bereich liegen müssen.

Dickere Membranen könnten zwar größeren Drücken standhalten, jedoch weisen sie eine völlig unzureichende Permeationsrate auf und würden für einen wirtschaftlich vertretbaren Durchgang außerordentlich große Flächen beanspruchen.

Aus den genannten Gründen konnten dünnere Membranen für großtechnische Prozesse bisher nicht eingesetzt werden. Bislang erfolgt beispielsweise das Einbringen von Gas, vorzugsweise von Sauerstoff in wäßrige Systeme (Trinkwasser, Abwässer, Fermentationslfüssigkeiten zum Regenerieren von Flüssen und Seen), durch Einblasen bzw. Einrühren von Luft, von mit Sauerstoff angereicherter Luft und von Sauerstoff. In Ausnahmefällen werden auch Chemikalien, wie beispielsweise Wasserstoffperoxid, eingesetzt.

Die bekannte Begasung wäßriger Systeme und der Gastransport von der Gas- in die Flüssigkeitsphase erfolgt immer über Blasenbildung. Dabei hängen die Transportgeschwindigkeit bzw. die Diffusionsgeschwindigkeit von der Blasengröße, d. h. der Austauschfläche ab. Bei herkömmlichen Systemen wird versucht, die Ausbildung größerer Blasen durch hohe Rührgeschwindigkeiten zu begrenzen. Die Gasausbeute bzw. -nutzung ist relativ gering und kann nur durch Umwälzen oder Einsatz aufwendiger Gegenstromanordnungen verbessert werden. Es kommt hinzu, daß ein außerordentlich hoher Energieaufwand für die Gaskompression und das Rühren in der Größenordnung bis zu etwa 10 Watt/l Flüssigkeit erforderlich ist. Durch eine hohe Rührgeschwindigkeit werden ferner große Scherkräfte erzeugt, die beispielsweise in biologischen Systemen sehr nachteilig sind, da sie den Metabolismus stören. Bei den herkömmlichen Druckbegasungsanordnungen geht ein großer Teil des eingebrachten Gases durch Austritt aus der Flüssigkeit wieder verloren.

Darüber hinaus führt insbesondere bei Fermenrationsverfahren das Einblasen von Gas im Zusammenhang mit hohen Rührgeschwindigkeiten zur Schaumbildung.

Bei der biologischen Abwasser-Behandlung in offenen Becken in überlasteten Anlagen ist außerdem die Geruchsbelästigung, die durch das durchströmende Gas verbreitet wird, erheblich. In jüngerer zeit wurde beispielsweise versucht, die Geruchsbelästigung durch Abdecken der offenen Anlagen zu reduzieren.

Auf dem Markt erhältliche Silikonkautschuk-Membranen (vgl. z. B. W. BROWALL and S. KIMURA, Permselective Membranes for Oxygen Enrichment, Technical Information, General Electric) aus einem dünnen Film und einer porösen Unterstützung eignen sich auch aus weiteren Gründen nicht zur Be- und Entgasung von größeren Flüssigkeitsmengen, da die Stützschicht auf der Niederdruckseite, d. h. zur Flüssigkeitsphase hin, angeordnet ist. Diese Grenzschicht in einer Stärke von 1 bis 3 mm verhindert eine schnelle Desorption und Vermischung des übergetretenen Gases in der Flüssigkeit.

Der Erfindung liegt die Aufgabe zugrunde, eine Silikonkautschuk-Membran der eingangs genannten Art zu schaffen, die sich auch mit Erfolg in großtechnischen Prozessen einsetzen läßt.

Die gestellte Aufgabe wird gemäß der Erfindung dadurch gelöst, daß die membran aus einer einzigen Schicht besteht, die durch elektrostatische Beschichtung des Stützgewebes mit einem vorvernetzten Beschichtungsmaterial gebildet ist.

Die wirksamen Membranflächen befinden sich zwischen den stützenden Fasern und sind gleichsam in einem Netz aufgehängt.

Vorzugsweise besteht dabei die Membran aus einem Polymerisat mit einem Anteil von mehr als 50 Gew.% Silikonkautschuk, und sie besitzt eine Stärke von 1 μm bis 500 μm.

Zweckmäßigerweise besteht das integrierte Stützgewebe aus einem korrosionsfesten Metall. In einer bevorzugten Ausführungsform ist das in die Membran integrierte Stützgewebe in Kett- und/oder Schußrichtung abwechselnd einfach und doppelt gewebt.

Je nach Anwendungsgebiet kann die erfindungsgemäße Membran flächig oder als Schlauch und gegebenenfalls in Form von Modulen ausgebildet werden. Sie kann auch als Schlauch/Flächenmodul in Form eines Doppelgewebes ausgebildet sein.

Ein zweckmäßiges Verfahren zur Herstellung der erfindungsgemäßen Silikonkautschuk-Membran sieht vor, daß auf das Stützgewebe ein Haftvermittler aufgebracht und das Stützgewebe sodann einmal oder mehrfach mittels einer Lösung eines Vorpolymers und eines Polymerisationsinitiators in einem Kohlenwasserstoff elektrostatisch beschichtet und gegebenenfalls nachfolgend einer Wärmebehandlung unterworfen wird.

Die erfindungsgemäße Silikonkautschuk-Membran läßt sich hervorragend zum Be- und Entgasen von Flüssigkeiten einsetzen, da die wirksame membranfläche direkt mit der Gasphase und der Flüssigkeitsphase in Berührung steht. Dabei erfolgt der Transport des Gases zwischen der Gasphase und der Flüssigkeit werden somit keine Blasen gebildet, da der Sauerstofftransport in molekularer Form erfolgt.

0 067 116

Bei Verwendung der erfindungsgemäßen Membran ergibt sich der Vorteil, daß von der flüssigen Phase nur soviel Gas aufgenommen wird, wie dort auch verbraucht wird. Sobald die Druckdifferenz $\Delta P$ den Wert Null erreicht hat, findet kein Durchgang mehr statt. Insofern reguliert sich ein derartiges System selbst, und es wird eine 100 %ige Ausnutzung des Gases und auch eine optimale Ausnutzung der eingesetzten Energie erzielt.

Die Transportgeschwindigkeit hängt bei Verwendung der erfindungsgemäßen Membran noch unwesentlich von der Desorptionsgeschwindigkeit an den Phasengrenzflächen bzw. vom Konzentrationsgefälle im Grenzflächenbereich ab. Dadurch lassen sich erhebliche Energie-Einsparungen erzielen, da die aufzuwendende Rührenergie nur noch ca. 10 % bis 20 % der in konventionellen Systemen aufzuwendenden Rührenergie beträgt und durch die Kompression der Gasphase sehr viel geringer als bei dem konventionellen Verfahren gehalten werden kann. Insgesamt ergibt sich eine Energie-Einsparung von bis zu 80 % im Verhältnis zu den bekannten Systemen bei gleicher Begasungsleistung.

Darüber hinaus ergibt sich bei gerührten Systemen der Vorzug, daß die Einbringung oder Entfernung des Gases unter milderen Konditionen erfolgt und die Störung der Flüssigkeitsphase gering gehalten wird.

Die erfindungsgemäße Membran läßt sich auch vorteilhaft zur Einbringung von Sauerstoff in Trinkwasser-Rohrnetze verwenden. Eine Anreicherung des Trinkwassers mit Sauerstoff ist zur Bildung und Stabilisierung von Schutzschichten in Trinkwasser-Rohrnetzen aus Eisenwerkstoffen zur Erhaltung der Leitungen und für eine gleichbleibende Wasserqualität erforderlich. Ein zu geringer Sauerstoffgehalt im Wasser verhindert die Schutzschichtbildung oder zerstört eine bereits gebildete Schicht. Die Einbringung von Sauerstoff über die erfindungsgemäßen Membranen erfordert lediglich geringe zusätzliche Baumaßnahmen oder Regelvorrichtungen und gewährleistet die erforderliche Sauerstoffkonzentration im Wasser über Selbstregulierung.

Die Einbringung kann selbstverständlich auch in Mineralwasser erfolgen. Die Flüssigkeitsphase kann auch eine durch organische Substanzen verunreinigte Flüssigkeit oder eine zur Fermentation bestimmte wäßrige Lösung oder Suspension sein. So kann beispielsweise mittels der erfindungsgemäßen Silikonkautschuk-Membran in eine mit einer organischen Substanz verunreinigte Flüssigkeit in einem sogenannten Belebungsbecken in Gegenwart von belebtem Schlamm Sauerstoff eingebracht werden. Darüber hinaus gelingt es, die Konzentration des im Verlauf biologischer Abbauvorgänge entstehenden $CO_2$ zu verringern und bei einem gewünschten, für den betreffenden Prozeß optimalen Wert zu halten. Das in manchen Verfahren toxisch wirkende $CO_2$ wird somit aus der flüssigen in die Gasphase überführt. Dadurch lassen sich teilweise erhebliche Ausbeutesteigerungen erzielen.

Die Gasphase kann Luft, mit Sauerstoff angereicherte Luft oder auch Sauerstoff mit einem Reinheitsgrad von mehr als 95 Gew.-% sein. Gegebenenfalls wird die Gasphase unter einem Überdruck von 0 bis 20 bar relativ zur Flüssigkeitsphase gehalten. Der Gasphase werden ständig Gase im Ausmaß des verbrauchten Gases zugeführt.

Die Regelung der Partialdrucke und damit die Geschwindigkeit des Stofftransportes der in den beiden Phasen befindlichen Gase erfolgt durch Änderung der relativen Konzentrationen der Einzelkomponenten. Der durch Diffusion verbrauchte Anteil des Gases kann erneuert werden, und gegebenenfalls wird die Gasphase in einem geschlossenen Kreislauf zurückgeführt.

Mit besonderem Vorteil läßt sich die erfindungsgemäße Membran in biologischen Systemen verwenden. Die aus der Flüssigkeitsphase durch die Membran in die Gasphase tretenden Gase können Reaktionsprodukte der in der Flüssigkeitsphase ablaufenden aeroben biologischen Prozesse sein. Es kann auch beispielsweise Sauerstoff aus der Gasphase durch die Membran in die Flüssigkeitsphase wandern und zur Beatmung aerober biologischer Prozesse dienen.

Aufgrund der variablen Ausgestaltung der erfindungsgemäßen Membranen wird der Transport von Gasen an jede beliebige Stelle eines Systems ermöglicht.

So kann beispielsweise Sauerstoff kontrolliert in Abwasserleitungsnetze zur Verhinderung von Geruchsbelästigungen durch anaeroben Abbau organischer Verunreinigungen gebracht werden. Ferner kann beispielsweise in einer Kläranlage Sauerstoff an die Stellen geführt werden, an denen aufgrund unzureichender Sauerstoff-Versorgung anaerobe Bedingungen herrschen, welche die eingangs erwähnten Geruchsbelästigungen bewirken. Ein weiterer erheblicher Vorteil bei der Verwendung der erfindungsgemäßen Membranen ergibt sich durch deren Porenfreiheit. Dadurch entfällt bei Fermentationsprozessen, die ein absolut staub- und keimfreies Begasungsmedium verlangen, eine aufwendige Vorbehandlung des Gases.

Bei Einrichtung der Membran als Festbett können Bakterien aufwachsen, die ihren Sauerstoffbedarf über den durch die Membran diffundierten Sauerstoff decken können. Dies ist bei der tertiären Abwasserbehandlung, in der Ammoniak zu Nitraten umgesetzt wird, von erheblicher Bedeutung.

Das nachfolgend beschriebene Beispiel erläutert die Erfindung anhand der Einbringung von Sauerstoff in Wasser unter Verwendung der erfindungsgemäßen Silikonkautschuk-Membran.

Beispiel

Eine erfindungsgemäße Silikonkautschuk-Membran mit einer Dicke von 0,125 mm, bestehend aus WACKER RTV-2 Silikonkautschuk VP 3625 und einem integrierten Stützgewebe aus rostfreiem Stahl

4

(Siebdruckgewebe, Drahtdicke 0,036 mm, Maschenweite 0,063 mm, offene Siebfläche 41 %) wurde in eine Zelle, in welcher der Sauerstoffaustausch staffinden soll, derart eingebracht, daß die Zelle durch die Membran geteilt wurde. Um die Anordnung zu stabilisieren und nach außen abzudichten, wurde die Membran zwischen zwei Gummidichtungen aufgelegt. Der obere Rand der beiden Zellhälften war nach außen stark verbreitert (Flansch) und diente als Auflage für die Gummidichtungen und zur Verschraubung der beiden Teile miteinander.

Das Volumen der Flüssigphase betrug 310 cm$^3$, das Volumen der Gasphase 146 cm$^3$, die Austauschfläche der Membran 66 cm$^2$. Die Messung des Sauerstoffgehaltes in der Flüssigphase erfolgte mittels einer Sauerstoffelektrode und eines Meßgerätes. Der Versuch wurde bei Raumtemperatur durchgeführt (19 °C). Nach Eichung der Sauerstoffelektrode wurde der untere Teil der Versuchsapparatur mit Leitungswasser gefüllt und der Magnetrührer eingeschaltet. Sodann wurde konzentrierte Natriumsulfitlösung in kleinen Mengen (0,5 bis 1 ml) zugesetzt, bis der Sauerstoffgehalt des Wassers auf den Wert Null abgesunken war.

Der obere Teil der Versuchsapparatur enthielt reinen Sauerstoff, der bei einem Überdruck von 15 cm WS gehalten wurde.

Die folgende Tabelle zeigt die gemessenen Sauerstoffkonzentrationen :

| Zeit (min.) | 0 | 1 | 2 | 3 | 4 | 5 | 6 | 7 | 8 | 9 |
|---|---|---|---|---|---|---|---|---|---|---|
| $O_2$-Konzentration (mg/l) | 0 | 0,40 | 1,31 | 2,09 | 2,98 | 3,82 | 4,68 | 5,52 | 6,33 | 7,18 |

| | 10 | 11 | 12 | 13 | 14 |
|---|---|---|---|---|---|
| | 7,90 | 8,69 | 9,50 | 10,26 | 11,0 |

Unter den gegebenen Bedingungen ergab sich aus den Tabellenwerten eine $O_2$-Permeationsrate von 2,4/g/m$^2$·h, oder, bei einer Membrandicke von 0,03 mm und einem $O_2$-Gasdruck von 5 bar eine $O_2$-Permeationsrate von 50 g/m$^2$·h.

**Patentansprüche**

1. Silikonkautschuk-Membran mit einem darin eingebetteten Stützgewebe zum Be- und Entgasen von Flüssigkeiten in großtechnischen Prozessen, dadurch gekennzeichnet, daß die Membran aus einer einzigen Schicht besteht, die durch elektrostatische Beschichtung des Stützgewebes mit einem vorvernetzten Beschichtungs-Material gebildet ist.

2. Silikonkautschuk-Membran nach Anspruch 1, dadurch gekennzeichnet, daß diese aus einem Polymerisat mit einem Anteil von mehr als 50 Gew.% Silikonkautschuk besteht und eine Stärke von 1 μm bis 500 μm aufweist.

3. Silikonkautschuk-Membran nach Anspruch 2, dadurch gekennzeichnet, daß das in die Membran eingebettete Stützgewebe aus einem korrosionsfesten Metall besteht.

4. Silikonkautschuk-Membran nach einem der Ansprüche 1 bis 3, dadurch gekennzeichnet, daß das in die Membran integrierte Stützgewebe in Kett- und/oder Schußrichtung abwechselnd einfach und doppelt gewebt ist.

5. Silikonkautschuk-Membran nach einem der Ansprüche 1 bis 4, dadurch gekennzeichnet, daß die Membran flächig und gegebenenfalls in Form eines Moduls ausgebildet ist.

6. Silikonkautschuk-Membran nach einem der Ansprüche 1 bis 4, dadurch gekennzeichnet, daß die Membran als Schlauch und gegebenenfalls in Form eines Moduls ausgebildet ist.

7. Silikonkautschuk-Membran nach einem der Ansprüche 1 bis 4, dadurch gekennzeichnet, daß die Membran als Schlauch/Flächenmodul in Form eines Doppelgewebes ausgebildet ist.

8. Verfahren zur Herstellung einer Silikonkautschuk-Membran nach einem der Ansprüche 1 bis 4, dadurch gekennzeichnet, daß auf das Stützgewebe ein Haftvermittler aufgebracht wird und das Stützgewebe sodann mittels einer Lösung eines Vorpolymers und eines Polymerisations-Initiators in einem Kohlenwasserstoff elektrostatisch beschichtet und gegebenenfalls nachfolgend einer Wärmebehandlung unterworfen wird.

9. Verwendung einer Membran nach einem der Ansprüche 1-7 zum Be- und Entgasen von Flüssigkeiten, wobei der Transport des Gases zwischen einer Gasphase und einer Flüssigkeitsphase mittels Diffusion durch die Membran hindurch erfolgt und in der Flüssigkeit keine Blasen gebildet werden.

10. Verwendung einer Membran nach Anspruch 9, dadurch gekennzeichnet, daß die Flüssigkeitsphase eine zur Fermentation bestimmte wäßrige Lösung und/oder Suspension ist.

11. Verwendung einer Membran nach Anspruch 9, dadurch gekennzeichnet, daß die Flüssigkeit Trinkwasser ist.

12. Verwendung einer Membran nach Anspruch 9, dadurch gekennzeichnet, daß die Flüssigkeitsphase eine durch organische Substanzen verunreinigte Flüssigkeit ist.

13. Verwendung einer Membran nach Anspruch 9, dadurch gekennzeichnet, daß die Gasphase Luft ist.

14. Verwendung einer Membran nach Anspruch 9, dadurch gekennzeichnet, daß die Gasphase mit Sauerstoff angereicherte Luft ist.

15. Verwendung einer Membran nach Anspruch 9, dadurch gekennzeichnet, daß die Gasphase aus mindestens 95 Gew.% Sauerstoff besteht.

16. Verwendung einer Membran nach einem der Ansprüche 9 bis 15, dadurch gekennzeichnet, daß die Gasphase unter einem Überdruck von 0 bis 20 bar relativ zur Flüssigkeitsphase gehalten wird.

17. Verwendung einer Membran nach einem der Ansprüche 13 bis 16, dadurch gekennzeichnet, daß der Sauerstoff aus der Gasphase durch die Membran in die Flüssigkeitsphase wandert und zur Sauerstoffversorgung aerober biologischer Prozesse dient.

18. Verwendung einer Membran nach Anspruch 17, dadurch gekennzeichnet, daß die aus der Flüssigkeitsphase durch die Membran in die Gasphase tretenden Gase Reaktionsprodukte der in der Flüssigkeitsphase ablaufenden aeroben biologischen Prozesse sind.

19. Verwendung einer Membran nach einem der Ansprüche 9 bis 18, dadurch gekennzeichnet, daß die Partialdrucke und die Geschwindigkeit des Stofftransports der in beiden Phasen befindlichen Gase durch Änderung der relativen Konzentrationen der Einzelkomponenten geregelt werden.

20. Verwendung einer Membran nach einem der Ansprüche 9 bis 19, dadurch gekennzeichnet, daß die Membran als Festbett angeordnet ist.

**Claims**

1. Membrane of silicone rubber with a supporting texture embedded therein for gasing and degasing of liquids in large technical processes, characterized in that the membrane consists of a single layer which is formed by electrostatically coating the supporting texture with a pre-cross-linked coating material.

2. Membrane of silicone rubber according to claim 1, characterized in that the said membrane consists of a polymerisate with a portion of more than 50 percent by weight of silicone rubber and has a thickness of 1 μm to 500 μm.

3. Membrane of silicone rubber according to claim 2, characterized in that the supporting texture embedded into the membrane consists of a corrosion resistant metal.

4. Membrane of silicone rubber according to one of claims 1 to 3, characterized in that the supporting texture integrated into the membrane is woven in wharp and/or weft direction alternatively in single or double manner.

5. Membrane of silicone rubber according to one of claims 1 to 4, characterized in that the membrane forms a flat shape or possibly a module.

6. Membrane of silicone rubber according to one of claims 1 to 4, characterized in that the membrane forms a hose and possibly a module.

7. Membrane of silicone rubber according to one of claims 1 to 4, characterized in that the module forms a hose/surface module in the form of a double texture.

8. Method for producing a membrane of silicone rubber according to one of claims 1 to 4, characterized in that onto the supporting texture an adhesion promoter is applied and thereafter the supporting texture is coated electrostatically in a hydrocarbon by means of a solution of a prepolymer and a polymerisation initiator, and possibly is thereafter subjected to a heat treatment.

9. Use of a membrane according to one of claims 1 to 7 for gasing and degasing of liquids, whereby the transport of the gas between a gas phase and a liquid phase takes place by means of diffusion through the membrane and whereby within the liquid no bubbles are produced.

10. Use of a membrane according to claim 9, characterized in that the liquid phase is an aqueous solution and/or suspension intended for fermentation.

11. Use of a membrane according to claim 9, characterized in that the liquid is drinking water.

12. Use of a membrane according to claim 9, characterized in that the liquid phase is a liquid which is contaminated by organic substances.

13. Use of a membrane according to claim 9, characterized in that the gas phase is air.

14. Use of a membrane according to claim 9, characterized in that the gas phase is air enriched with oxygen.

15. Use of a membrane according to claim 9, characterized in that the gas phase consists of at least 95 percent by weight oxygen.

16. Use of a membrane according to one of claims 9 to 15, characterized in that the gas phase is kept under excess pressure of 0 to 20 bar relative to the liquid phase.

17. Use of a membrane according to one of claims 13 to 16, characterized in that the oxygen travels from the gas phase through the membrane into the liquid phase and serves for oxygen supply in aerobic biological processes.

18. Use of a membrane according to claim 17, characterized in that the gases entering from the liquid phase through the membrane into the gas phase are reaction products of the aerobic biological processes occurring in the liquid phase.

19. Use of a membrane according to one of claims 9 to 18, characterized in that the partial pressures and the speed of the material transport of the gases being in the two phases is controlled by variation of the relative concentrations of the individual components.

20. Use of a membrane according to one of claims 9 to 19, characterized in that the membrane is arranged as solid bed.


**Revendications**

1. Membrane de caoutchouc silicone avec tissu support incorporé pour charger en gaz et dégazer un liquide dans des procédés techniques industriels, caractérisée en ce que la membrane est formée d'une couche unique qui est fabriquée en revêtant électrostatiquement le tissu support par un matériau de revêtement préréticule.

2. Membrane en caoutchouc silicone suivant la revendication 1, caractérisée en ce qu'elle est formée d'un produit de polymérisation avec une portion supérieure à 50 % en poids de caoutchouc silicone et présente une épaisseur allant de 1 à 500 µm.

3. Membrane de caoutchouc silicone suivant la revendication 2, caractérisée en ce que le tissu support incorporé dans la membrane est formé d'un métal résistant à la corrosion.

4. Membrane de caoutchouc silicone suivant l'une des revendications 1 à 3, caractérisée en ce que le tissu support incorporé dans la membrane est tissu en simple et en double alternativement dans le sens de la chaîne et/ou dans le sens de la trame.

5. Membrane de caoutchouc silicone suivant l'une des revendications 1 à 4, caractérisée en ce que la membrane est plate ou éventuellement sous forme modulaire.

6. Membrane de caoutchouc silicone suivant l'une des revendications 1 à 4, caractérisée en ce que la membrane est en forme de tuyau ou éventuellement sous forme modulaire.

7. Membrane de caoutchouc silicone suivant l'une des revendications 1 à 4, caractérisée en ce que la membrane est une module tuyau/plat en forme de tissu double.

8. Méthode de fabrication d'une membrane en caoutchouc silicone suivant l'une des revendications 1 à 4, caractérisée en ce que sur le tissu support, est appliqué un intermédiaire adhésif et en ce que le tissu support est recouvert électrostatiquement au moyen d'une solution d'un prépolymer et d'un initiateur de polymérisation dans un carbure d'hydrogène et éventuellement subit ensuite un traitement thermique.

9. Application d'une membrane suivant l'une des revendications 1 à 7 pour charger en gaz et dégazer des liquides de manière que le passage du gaz entre une phase gazeuse et une phase liquide soit effectué par diffusion à travers la membrane et qu'aucune bulle ne se crée dans le liquide.

10. Application d'une membrane suivant la revendication 9, caractérisée en ce que la phase liquide est une solution et/ou une suspension aqueuse prévue pour une fermentation.

11. Application d'une membrane suivant la revendication 9, caractérisée en ce que le liquide est de l'eau potable.

12. Application d'une membrane suivant la revendication 9, caractérisée en ce que la phase liquide est un liquide pollué par une substance organique.

13. Application d'une membrane suivant la revendication 9, caractérisée en ce que la phase gazeuse est de l'air.

14. Application d'une membrane suivant la revendication 9, caractérisée en ce que la phase gazeuse est de l'air enrichi en oxygène.

15. Application d'une membrane suivant la revendication 9, caractérisée en ce que la phase gazeuse contient au moins 95 % en poids d'oxygène.

16. Application d'une membrane suivant l'une des revendications 9 à 15, caractérisée en ce que la phase gazeuse est maintenue en surpression de 0 à 20 bar par rapport à la phase liquide.

17. Application d'une membrane suivant l'une des revendications 13 à 16, caractérisée en ce que l'oxygène passe à travers la membrane de la phase gazeuse dans la phase liquide et sert pour l'alimentation en oxygène dans un procédé biologique aérobie.

18. Application d'une membrane suivant la revendication 17, caractérisée en ce que les gaz passant à travers la membrane de la phase liquide dans la phase gazeuse sont des produits de réaction du procédé biologique aérobie se produisant dans la phase liquide.

19. Application d'une membrane suivant l'une des revendications 9 à 18, caractérisée en ce que la pression partielle et la vitesse de passage des gaz se trouvant dans les deux phases sont contrôlées en faisant varier les concentrations relatives des composants individuels.

20. Application d'une membrane suivant l'une des revendications 9 à 19, caractérisée en ce que la membrane est disposée comme un lit solide.